# DEMANDE DE BREVET EUROPEEN

(11) **EP 1 564 994 A1**
(43) Date de publication de la demande: **17.08.2005**
(21) Numéro de dépôt: 04100604.0
(22) Date de dépôt: 13.02.2004
(51) Int. Cl.: H04N 7/167, H04N 7/16, H04N 5/00

(54) **Méthode de gestion des droits d'abonnés à un système de télévision à péage multi-operateurs**

(71) Demandeur: Nagravision S.A., 1033 Cheseaux-sur-Lausanne (CH)
(72) Inventeur: DUVAL, Grégory, 1093, La Conversion (CH)
(74) Mandataire: Wenger, Joel-Théophile

(57) **Abrégé**

La présente invention propose une méthode de gestion des droits d'abonnés à un système de télévision à péage comprenant un système de contrôle d'accès (CAS) auquel sont connectés des systèmes de gestion d'abonnés (SMS1, SMS2, SMS3) gérés chacun par un opérateur (OP1, OP2, OP3) et une pluralité de décodeurs d'abonnés (STBn), lesdits décodeurs (STBn) étant équipés chacun d'un module de sécurité (SMn) contenant des droits propres à chaque abonné lui permettant de décrypter des données numériques cryptées d'un flux diffusé par au moins un opérateur (OP1, OP2, OP3), lors d'une modification des droits effectuée par un opérateur dans le module de sécurité (SMn) d'un abonné, ladite méthode est caractérisée en ce qu'elle comprend les étapes suivantes:
- réception, par le système de contrôle d'accès (CAS), de données identifiant un abonné (ID_{SMn}) avec des commandes de modification de droits C(Dm) dudit abonné en provenance d'un système de gestion d'abonné (SMS1, SMS2, SMS3) d'un opérateur (OP1, OP2, OP3),
- vérification des modifications en fonction des propriétés et des ressources disponibles du module de sécurité (SMn),
- génération d'un message d'administration (EMM1) contenant les droits modifiés (Dm) lorsque le résultat de la vérification est positif,
- transmission dudit message (EMM1) au module de sécurité (SMn) de l'abonné via le flux contenant les données cryptées.

## Description

La présente invention concerne le domaine de la télévision à péage ou plus particulièrement la gestion des droits d'abonnés lorsque le système de contrôle d'accès est connecté à plusieurs opérateurs. Ce système est chargé d'administrer une pluralité de décodeurs d'abonnés en leur autorisant ou non de décrypter des programmes audio et/ou vidéo selon les droits qu'ils ont acquis auprès des opérateurs.

Le fonctionnement d'un décodeur est géré par un module de sécurité ou carte à puce contenant des données propres à un abonné. Ces données comprennent des droits payés par l'abonné lui permettant de décrypter des programmes audio et/ou vidéo numériques diffusés par un opérateur via un câble, un satellite ou tout autre réseau de diffusion.

Chaque opérateur dispose et gère une base de données contenant les données relatives au contrat que chaque abonné a conclu avec l'opérateur. Ces bases de données sont connectées à un système de contrôle d'accès dont un des rôles est de générer des messages d'administration appelés EMM "Entitlement Management Messages", c'est-à-dire des messages contenant des commandes destinées à un décodeur ou à un groupe de décodeurs. Ces messages sont diffusés dans le flux de données des programmes audio et/ou vidéo et sont traités par le module de sécurité du décodeur. Ce dernier stocke des droits autorisant ou non la décryption d'un programme qu'un abonné a sollicité auprès d'un opérateur.

Selon une configuration connue, chaque opérateur de télévision numérique gère un ensemble d'abonnés possédant au moins un décodeur fonctionnant avec un module de sécurité fourni par l'opérateur. Lorsqu'un abonné désire décrypter les programmes d'un autre opérateur, il est invité à remplacer le module de sécurité du premier opérateur par celui du second auquel il a acheté des droits correspondant à des programmes que seul cet autre opérateur administre. Ce changement de module de sécurité n'est possible qu'avec un décodeur muni d'un module sous forme d'une carte à puce amovible ou de cartes commutables insérées dans plusieurs lecteurs de cartes.

Une telle configuration présente un inconvénient lors de l'accroissement du nombre d'opérateurs spécialisés qui chacun propose une carte à insérer dans le décodeur pour pouvoir décrypter leurs programmes. Ainsi un abonné peut être contraint à changer de carte aussi souvent qu'il change de type de programme. Par exemple lors du passage d'un programme sportif à un film puis à un programme de variétés et à nouveau au programme sportif, l'abonné peut changer de carte jusqu'à trois fois.

Le but de la présente invention est de pallier notamment cet inconvénient en permettant l'utilisation d'un module de sécurité fixe dans le décodeur tout en offrant à l'abonné la possibilité de souscrire un abonnement chez plusieurs opérateurs. De plus, dans le cas des décodeurs à cartes amovibles, la présente invention permet de réduire le nombre de cartes nécessaires à l'abonné lorsqu'il désire décrypter les programmes provenant d'opérateurs différents.

Ce but est atteint par une méthode de gestion des droits d'abonnés à un système de télévision à péage comprenant un système de contrôle d'accès auquel sont connectés des systèmes de gestion d'abonnés gérés chacun par un opérateur et une pluralité de décodeurs d'abonnés, lesdits décodeurs étant équipés chacun d'un module de sécurité contenant des droits propres à chaque abonné lui permettant de décrypter des données numériques cryptées d'un flux diffusé par au moins un opérateur, lors d'une modification des droits effectuée par un opérateur dans le module de sécurité d'un abonné, ladite méthode est caractérisée en ce qu'elle comprend les étapes suivantes:
- réception, par le système de contrôle d'accès, de données identifiant un abonné avec des commandes de modification de droits dudit abonné en provenance d'un système de gestion d'abonné d'un opérateur,
- vérification des modifications en fonction des propriétés et des ressources disponibles du module de sécurité
- génération d'un message d'administration contenant les droits modifiés (Dm) lorsque le résultat de la vérification est positif,
- transmission dudit message au module de sécurité de l'abonné via le flux contenant les données cryptées.

Le module de sécurité utilisé dans le décodeur peut stocker des droits permettant de décrypter des données numériques audio-vidéo en provenance de plusieurs opérateurs grâce à une mémoire divisée en plusieurs zones allouées chacune à un opérateur. La capacité mémoire est définie par chaque opérateur selon le format et la structure des données de droits à stocker.

Une modification de droits d'un abonné transmise par le système de gestion des droits d'un opérateur au système de contrôle d'accès est d'abord vérifiée par celui-ci en fonction des caractéristiques du module de sécurité de l'abonné. En effet, le contenu de la zone mémoire disponible à un opérateur donné dépend des droits existants et de la taille globale des données atteinte après leur modification.

Lorsque le résultat de la vérification est positif, c'est-à-dire qu'il est possible de stocker les données relatives aux droits modifiés dans la zone mémoire attribuée à l'opérateur concerné, le système de contrôle d'accès transmet un message d'administration au module de sécurité. Ce message contient les droits modifiés qui peuvent soit s'ajouter à ceux existant dans le module de sécurité, soit les remplacer.

La vérification donne un résultat négatif lorsque la modification des droits est incompatible avec les ressources disponibles du module de sécurité c'est-à-dire la taille de la zone mémoire libre. Ce cas se présente lorsque la taille totale des données des droits existants et des données des droits modifiés dépasse la taille de la zone mémoire disponible. Le système de contrôle d'accès transmet alors un message d'erreur vers le système de gestion des abonnés de l'opérateur. Ce dernier peut proposer à l'abonné une nouvelle configuration de ses droits en supprimant, par exemple, ceux qui ne sont pas utilisés de manière à réduire la taille des données à mémoriser dans le module de sécurité. Le système de gestion des abonnés transmet alors un nouveau jeu de commandes qui sera vérifié avec succès par le système de contrôle d'accès qui pourra transmettre le message d'administration adéquat au module de sécurité de l'abonné.

Le système de contrôle d'accès possède en quelque sorte un filtre chargé d'éliminer des modifications de données de droits ne pouvant pas être mises en oeuvre dans les modules de sécurité des abonnés soit à cause d'un manque de capacité mémoire, soit à cause des données déjà présentes dans ladite mémoire.

L'invention sera mieux comprise grâce à la description détaillée qui va suivre et qui se réfère aux dessins annexés qui sont donnés à titre d'exemple nullement limitatif, à savoir:
- la figure 1 illustre un schéma bloc réunissant des systèmes de gestion d'abonnés et un système de contrôle d'accès auquel est connecté un décodeur selon l'art antérieur.
- la figure 2 illustre un schéma bloc réunissant des systèmes de gestion d'abonnés et un système de contrôle d'accès muni d'un module filtrage selon la présente invention, avec l'acceptation d'une modification de droits par le module de filtrage.
- la figure 3 illustre le schéma bloc de la figure 2 avec le refus d'une modification de droits par le module de filtrage.
- la figure 4 illustre une variante du schéma bloc des figures 2 et 3 où le module de filtrage est inclus dans le module de sécurité.

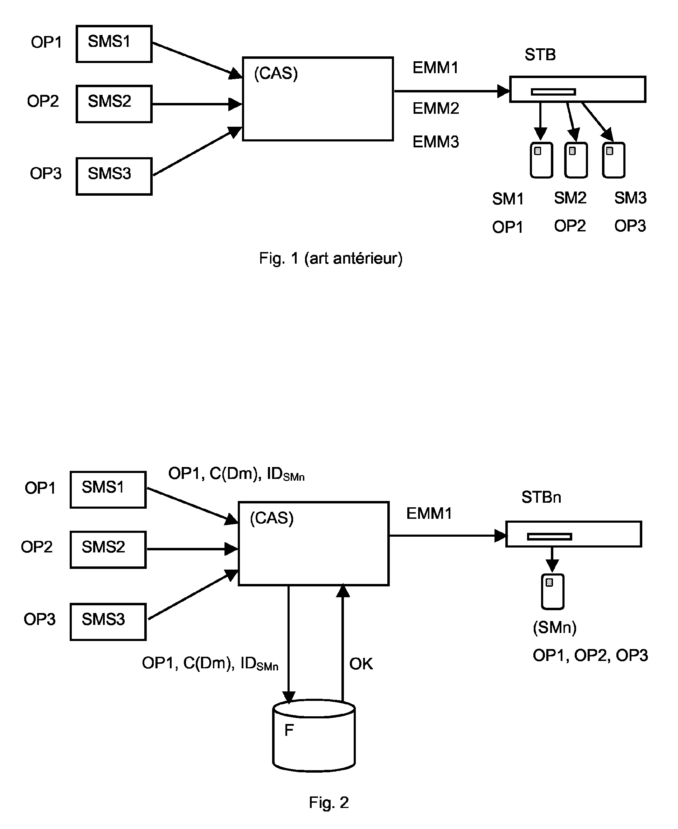

La figure 1 montre la configuration connue d'un système de contrôle d'accès (CAS) connecté à des systèmes de gestion d'abonnés ou "Subscriber Management System" (SMS1), (SMS2) et (SMS3) comportant chacun une base de données gérée respectivement par les opérateurs (OP1), (OP2) et (OP3). Ces bases contiennent entre autres des données définissant l'identité d'un abonné et le profil de son contrat, des données sur l'équipement de l'abonné (type, propriétés, configuration et identificateur du décodeur et du ou des modules de sécurité), des données concernant les produits et/ou services (programmes audio et/ou vidéo, logiciels, mises à jours) que l'abonné a acheté, des données concernant la comptabilité de l'abonné (factures payées, soldes et crédits de comptes). Des extraits de ces données sont transmis au système de contrôle d'accès (CAS) dont une des fonctions consiste à interpréter et compiler les données reçues pour former des messages d'administration EMM "Entitlement Management Messages" ; (EMM1), (EMM2) et (EMM3) destinés aux décodeurs ou "Set Top Box" STB des abonnés. Dans cet exemple, un abonné a souscrit un abonnement pour des programmes audio et/ou vidéo choisis auprès des trois opérateurs (OP1), (OP2) et (OP3), et possède les modules de sécurité ou les cartes à puce (SM1), (SM2) et (SM3) correspondantes. Les caractéristiques de ces abonnements sont traduites en droits de décryptage stockés sur les cartes à puce (SM1), (SM2) et (SM3) que le système de contrôle d'accès met à jour grâce aux messages d'administration respectivement (EMM1), (EMM2) et (EMM3). Ainsi chaque changement tel qu'un nouvel achat d'un programme ou une modification d'une période d'accès à un programme, par exemple auprès d'un opérateur (OP1), est enregistré dans la base de données de son système de gestion d'abonné (SMS1). Ce dernier transmet ces changements au système de contrôle d'accès (CAS) qui génère un message (EMM1) modifié qui sera introduit dans le flux de diffusion des programmes. Le décodeur (STB) de l'abonné recevant ce flux en extrait le message (EMM1) qui sera acheminé à la carte à puce (SM1) correspondant à l'opérateur (OP1) préalablement insérée dans le décodeur (STB).

La figure 2 représente un schéma bloc similaire à celui de la figure 1 mais dont le système de contrôle d'accès est configuré de manière à fonctionner selon la méthode de l'invention. Dans ce cas, les opérateurs (OP1), (OP2) et (OP3) peuvent transmettre des commandes servant à modifier des paramètres dans les modules de sécurité (SMn) d'abonnés. Il ne s'agit pas d'une mise en commun de données des différents opérateurs dans une base globale mais seulement de compléter des abonnements en cours par des programmes et/ou services supplémentaires par exemple. En effet, dans cette configuration, chaque base de données associée aux systèmes de gestion d'abonnés (SMS1), (SMS2) et (SMS3) reste indépendante et transmet des commandes C(Dm) et des identificateurs (ID_{SMn}) de modules de sécurité (SMn) d'abonnés au système de contrôle d'accès (CAS) qui est commun à tous les opérateurs (OP1, OP2, OP3). A la réception de ces données (C(Dm), ID_{SMn}), en provenance de l'un ou l'autre des trois opérateurs (OP1, OP2, OP3), le système de contrôle d'accès (CAS) les transfère dans un module logiciel de filtrage (F).

Par exemple, lorsqu'un opérateur (OP1) envoie une commande C(Dm) pour étendre les droits Dm d'un abonné identifié par l'identificateur (ID_{SMn}) de son module sécurité (SMn) en lui autorisant l'accès à certains programmes supplémentaires, l'action est acceptée par le module de filtrage (F) seulement si elle peut être exécutée par le module de sécurité (SMn) du décodeur (STBn) de l'abonné.

Dans un tel cas le module de filtrage (F) reçoit un ensemble de données comprenant un identificateur de l'opérateur ici (OP1), un identificateur (ID_{SMn}) du module de sécurité (SMn) et une commande C(Dm) de modification de droits dans la zone mémoire du module sécurité (SMn) attribuée à l'opérateur (OP1). Ces données sont vérifiées par confrontation avec celles contenues dans la base de données du système de contrôle d'accès (CAS). Cette base contient notamment les caractéristiques des modules de sécurité (SMn) de chaque abonné connecté, ainsi que des données décrivant les droits stockés dans chaque zone mémoire allouée à chaque opérateur. Le résultat de cette vérification est positif lorsque les droits modifiés (Dm) peuvent être stockés dans le module de sécurité (SMn). Autrement dit, l'espace mémoire occupé par les nouveaux droits ajoutés à ceux préexistants dans le module de sécurité est inférieur ou égal à la capacité maximale allouée à l'opérateur. Cette condition étant remplie, le module de filtrage (F) transmet une réponse d'acceptation (OK) au système de contrôle d'accès (CAS). Ce dernier génère un message d'administration (EMM1) à destination du module de sécurité (SMn) connecté au décodeur STBn. Ce message (EMM1) mettra à jour le contenu du module de sécurité (SMn) selon la commande C(Dm) préalablement transmise par le système de gestion des abonnés (SMS1) dépendant de l'opérateur (OP1).

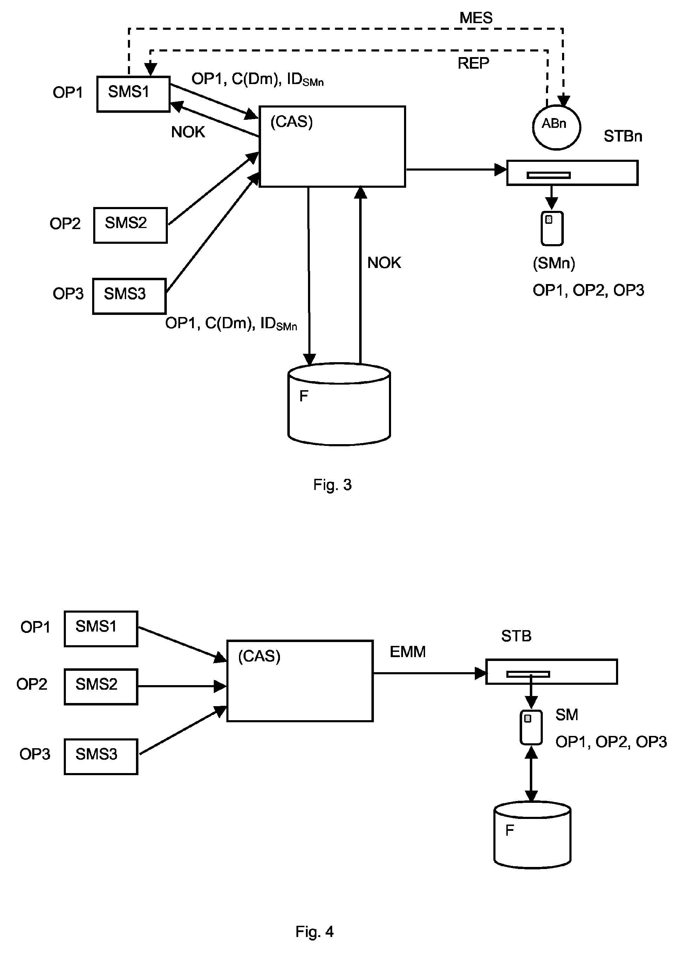

La figure 3 illustre le schéma bloc de la figure 2 où la vérification des données associée à une commande de modification de droits C(Dm) par le module de filtrage (F) donne un résultat négatif. Cette situation apparaît lorsque les droits modifiés (Dm) ne peuvent pas être stockés dans le module de sécurité (SMn) car la taille de l'ensemble des données après modification est supérieure à celle de la zone mémoire disponible dans le module de sécurité (SMn). Le module de filtrage (F) transmet alors une réponse de refus (NOK) sous forme d'un message d'erreur indiquant au système de contrôle d'accès (CAS) que les modifications ne sont pas acceptables par le module de sécurité (SMn). Cette réponse de refus (NOK) est ensuite retournée au système de gestion d'abonnés (SMS1) de l'opérateur (OP1) concerné. Ce dernier avertit l'abonné (Abn) au moyen d'un message (MES) en lui proposant de choisir une nouvelle configuration de ses droits (Dm) ou un nouveau bouquet en supprimant et/ou en remplaçant des droits superflus stockés dans le module de sécurité (SMn). L'abonné (Abn) transmet une réponse (REP) à l'opérateur (OP1) qui transmettra la nouvelle commande de modification C'(Dm) au système de contrôle d'accès (CAS). Le module de filtrage (F) procède à une nouvelle vérification qui aboutira à un résultat positif grâce à un ensemble de données à stocker de taille réduite ce qui permettra la génération d'un message d'administration (EMM1) (voir figure 2).

Selon une variante de la présente invention illustrée par la figure 4, le module de filtrage (F) est inclus dans le module de sécurité (SMn) du décodeur (STBn) au lieu d'être intégré dans le système de contrôle d'accès (CAS). Dans ce cas, les messages d'administration (EMM) générés par le système de contrôle d'accès (CAS) comportent des champs supplémentaires contenant les identificateurs des différents opérateurs (OP1), (OP2) et (OP3) accompagnés des commandes de modification C(Dm) à exécuter par le module de sécurité (SMn). Ce dernier stocke, analyse le message (EMM) et vérifie les modifications des droits (Dm) transmises par un opérateur (OP1, OP2, OP3) en fonction de la capacité de la zone mémoire du module de sécurité attribuée à l'opérateur. Les modifications aboutissant à une surcharge de capacité mémoire dans le module de sécurité sont éliminées. Un message adéquat est alors affiché sur l'écran associé au décodeur incitant l'abonné à requérir une nouvelle modification compatible avec les ressources de son module de sécurité (SMn) comme décrit dans la variante précédente.

Bien entendu la méthode de gestion de droits d'abonnés, selon l'invention, fonctionne aussi bien dans les configurations ou le décodeur possède une voie de retour que dans celles où cette voie est absente. Dans ce dernier cas, les réponses de l'abonné aux messages d'avertissement issues de modifications de droits rejetées peut être transmise à l'opérateur par téléphone, fax, courrier électronique ou postal.

## Revendications

1. Méthode de gestion des droits d'abonnés à un système de télévision à péage comprenant un système de contrôle d'accès (CAS) auquel sont connectés des systèmes de gestion d'abonnés (SMS1, SMS2, SMS3) gérés chacun par un opérateur (OP1, OP2, OP3) et une pluralité de décodeurs d'abonnés (STBn), lesdits décodeurs (STBn) étant équipés chacun d'un module de sécurité (SMn) contenant des droits propres à chaque abonné lui permettant de décrypter des données numériques cryptées d'un flux diffusé par au moins un opérateur (OP1, OP2, OP3), lors d'une modification des droits effectuée par un opérateur dans le module de sécurité (SMn) d'un abonné, ladite méthode est **caractérisée en ce qu'**elle comprend les étapes suivantes:
• réception, par le système de contrôle d'accès (CAS), de données identifiant un abonné (ID_{SMn}) avec des commandes de modification de droits C(Dm) dudit abonné en provenance d'un système de gestion d'abonné (SMS1, SMS2, SMS3) d'un opérateur (OP1, OP2, OP3),
• vérification des modifications en fonction des propriétés et des ressources disponibles du module de sécurité (SMn),
• génération d'un message d'administration (EMM1) contenant les droits modifiés (Dm) lorsque le résultat de la vérification est positif,
• transmission dudit message EMM1 au module de sécurité (SMn) de l'abonné via le flux contenant les données cryptées.

2. Méthode selon la revendication 1, **caractérisée en ce que** la vérification des modifications des droits est effectuée par un module de filtrage (F) connecté au système de contrôle d'accès (CAS).

3. Méthode selon les revendications 1 et 2 **caractérisée en ce que** les droits d'accès aux données numériques cryptées en provenance de plusieurs opérateurs (OP1, OP2, OP3) sont stockés dans le module de sécurité (SMn) dans des zones mémoire prédéfinies allouées à chaque opérateur.

4. Méthode selon les revendications 1 à 3 **caractérisée en ce que** le module de filtrage (F) transmet une réponse d'acceptation (OK) entraînant la génération du message d'administration (EMM1) lorsque la taille totale des données des droits existants et des données des droits modifiés Dm est inférieure ou égale à la taille de la zone mémoire disponible dans le module de sécurité (SMn).

5. Méthode selon les revendications 1 à 3 **caractérisée en ce que** le module de filtrage (F) transmet une réponse de refus (NOK) au système de contrôle d'accès (CAS) lorsque la taille totale des données des droits existants et des données des droits modifiés est supérieure à la taille de la zone mémoire disponible dans le module de sécurité (SMn).

6. Méthode selon la revendication 5, **caractérisée en ce que** la réponse de refus (NOK) est retournée au système de gestion des abonnés (SMS1).

7. Méthode selon la revendication 6, **caractérisée en ce que** le système de gestion des abonnés (SMS1) transmet un message (MES) d'avertissement à l'abonné (Abn), ledit message (MES) proposant une nouvelle configuration des droits audit abonné (Abn) par suppression et/ou remplacement des droits superflus stockés dans le module de sécurité.

8. Méthode selon les revendications 1 et 6, **caractérisée en ce que** l'abonné (Abn) transmet une réponse (REP) à l'opérateur (OP1) qui transmettra une nouvelle commande de modification C(Dm) au système de contrôle d'accès (CAS), le module de filtrage (F) procède à une nouvelle vérification aboutissant à un résultat positif grâce à la taille réduite des nouvelles données à stocker dans le module de sécurité suivie de la génération d'un message d'administration EMM1.

9. Méthode selon la revendication 8 **caractérisée en ce que** la réponse (REP) est transmise par la voie de retour du décodeur (STBn) de l'abonné (Abn).

10. Méthode selon la revendication 8 **caractérisée en ce que** la réponse (REP) est transmise par téléphone, fax, courrier électronique ou postal, lorsque la voie de retour du décodeur est absente.

11. Méthode selon la revendication 1 **caractérisée en ce que** la vérification des modifications des droits est effectuée par un module de filtrage (F) inclus dans le module de sécurité (SMn) du décodeur (STBn).

12. Méthode selon la revendication 11 **caractérisée en ce que** les messages d'administration EMM générés par le système de contrôle d'accès (CAS) comportent des champs supplémentaires contenant les identificateurs des différents opérateurs (OP1, OP2 et OP3) accompagnés des commandes C(Dm) de modification des droits.

13. Méthode selon la revendication 11 et 12 **caractérisée en ce que** le module de filtrage (F) du module de sécurité (SMn) stocke, analyse le message EMM et vérifie les modifications des droits transmises par un opérateur (OP1) en fonction de la capacité de la zone mémoire du module de sécurité attribuée audit opérateur.
